# EUROPEAN PATENT SPECIFICATION

(11) **EP 3 785 931 B1**
(45) Date of publication and mention of the grant of the patent: **29.06.2022**
(21) Application number: 20192630.0
(22) Date of filing: 25.08.2020
(51) Int. Cl.: B60C 7/08, B60C 7/14, B60C 7/18

(54) **NON-PNEUMATIC LOOPER TIRE**
NICHT-PNEUMATISCHER SCHLINGENREIFEN
PNEU NON PNEUMATIQUE DE BOUCLEUR

(30) Priority: 29.08.2019 US 201962893670 P; 03.08.2020 US 202016983524
(43) Date of publication of application: 03.03.2021
(73) Proprietor: The Goodyear Tire & Rubber Company, Akron, OH 44316 (US)
(72) Inventor: DURR, Michael Joseph, Stow, OH Ohio 44224 (US); GOPALA, Arun Kumar Byatarayanapura, Copley, OH Ohio 44321 (US); SIGLER, Wesley Glen, Baberton, OH Ohio 44203 (US); MILLER, Andrew James, Berlin Center, Ohio 44401 (US)
(74) Representative: Goodyear IP Law

(56) References cited:
- EP-A1- 3 321 098
- WO-A1-2011/025491
- WO-A1-2017/116384
- WO-A1-2018/115940
- WO-A1-2018/200142
- JP-A- 2007 137 207
- US-A1- 2015 251 493
- US-A1- 2019 126 673

## Description

### Field of the Invention

The present invention relates generally to vehicle tires and, more particularly, to a non-pneumatic tire and wheel assembly.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non pneumatic tire is desired that has all the features of the pneumatic tires without the drawback of the need for air inflation is desired. WO 2017/116384 A1 discloses a non-pneumatic tire and wheel assembly in accordance with the preamble of claim 1 .

### Summary of the Invention

The invention relates to a tire and wheel assembly in accordance with claim 1.

Dependent claims refer to preferred embodiments of the invention.

In a preferred aspect of the invention, the first row of spoke loops are pretensioned.

In one aspect of the invention, each spoke loop may have a side that is be oriented in the radial direction.

In another aspect of the invention, each spoke loop may have a side that is not be oriented in the radial direction.

### Brief Description of the Drawings

The present invention will be better understood through reference to the following description and the appended drawings, in which:
FIG. 1 is a perspective view of a first embodiment of a non-pneumatic tire of the present invention.
FIG. 2 is a cross-sectional perspective view of the non-pneumatic tire of Figure 1.
FIG. 3 is an exploded view of non-pneumatic tire of Figure 1.
FIG. 4 is a perspective view of the spoke loop structure of the present invention.
FIG. 5 is a front view of the spoke loop structure of the present invention.
FIG. 6 is a front perspective view of the wheel of the present invention.

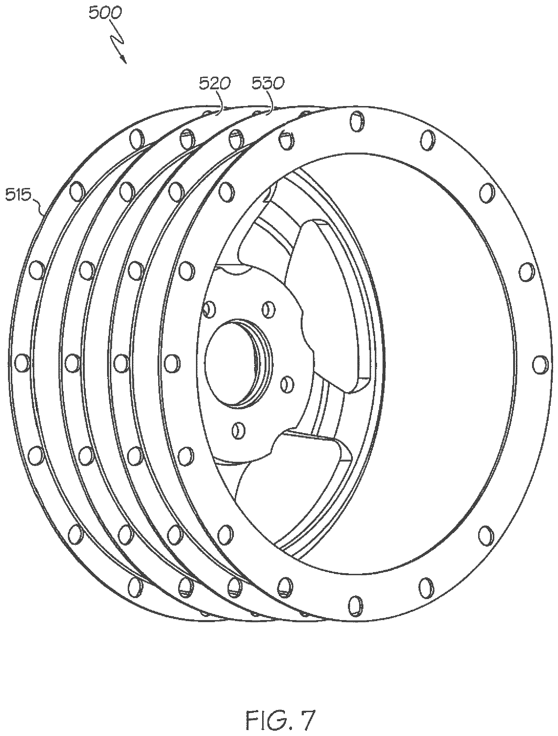

FIG. 7 is a rear perspective view of the wheel of the present invention.
FIG. 8a is a front view of an alternate embodiment of a spoke loop structure having a single set of loops, while Figure 8b is a close-up view of the spoke loops, and Figure 8C is variation of Fig. 8a with more loops.
FIG. 9 is a cross-sectional view of the spoke loop structure illustrating the shear band.

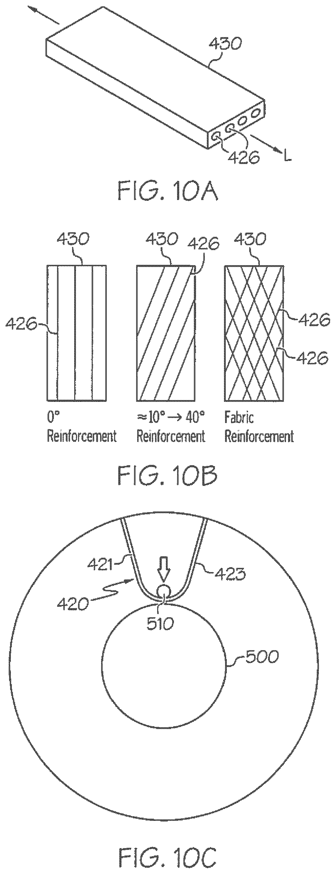

FIG. 10a illustrates a perspective view of a strip of elastomer with parallel reinforcement cords while FIG. 10b illustrates different orientations of the reinforcement cords for the strip of elastomer.

### Definitions

The following terms are defined as follows for this description.

"Equatorial Plane" means a plane perpendicular to the axis of rotation of the tire passing through the centerline of the tire.

"Meridian Plane" means a plane parallel to the axis of rotation of the tire and extending radially outward from said axis.

"Hysteresis" means the dynamic loss tangent measured at 10 percent dynamic shear strain and at 25°C.

### Detailed Description of Example Embodiments of the Invention

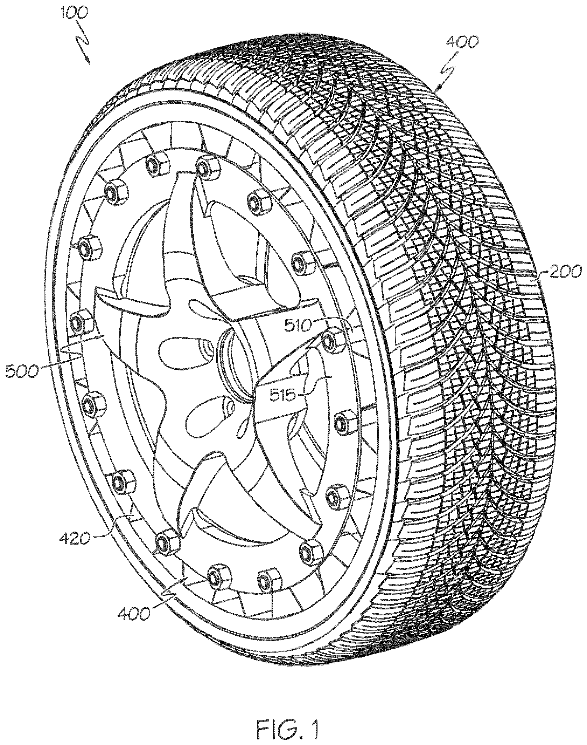

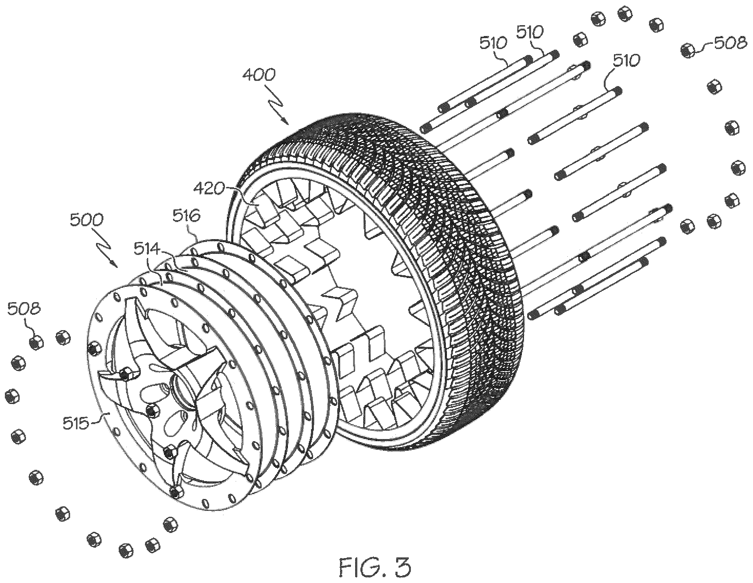

The non-pneumatic tire 100 in accordance with an embodiment of the present invention is shown in Figures 1-5. The non-pneumatic tire includes a spoke loop structure 400 having a plurality of spoke loops 420. The spoke loop structure 400 further includes a radially outer ground engaging tread 200 and shear band 300. The tread 200 may be conventional in design, and include the various elements known to those skilled in the art of tread design such as ribs, blocks, lugs, grooves, and sipes as desired to improve the performance of the tire in various conditions. The design of the shear band 300 allows the non-pneumatic tire of the present invention to be a top loaded structure, so that the shear band 300 and the spoke loops efficiently carry the load. The shear band 300 and the spoke loops 420 are designed so that the stiffness of the spoke loops 420 is directly related to the spring rate of the tire. The spoke loops 420 are designed to be structures that buckle or deform in the tire footprint yet are unable to carry a compressive load. This allows the rest of the loops not in the footprint area the ability to carry the load. Since there are more spoke loops outside of the footprint than inside the footprint, the load per spoke loop would be small enabling smaller loops to carry the tire load which gives a very load efficient structure. It is desired to minimize this compressive load on the spokes for the reasons set forth above and to allow the shear band to bend to overcome road obstacles. The approximate load distribution is such that approximately 90-100% of the load is carried by the shear band and the upper spokes, so that the lower spokes carry virtually zero of the load and preferably less than 10%.

### Shear Band

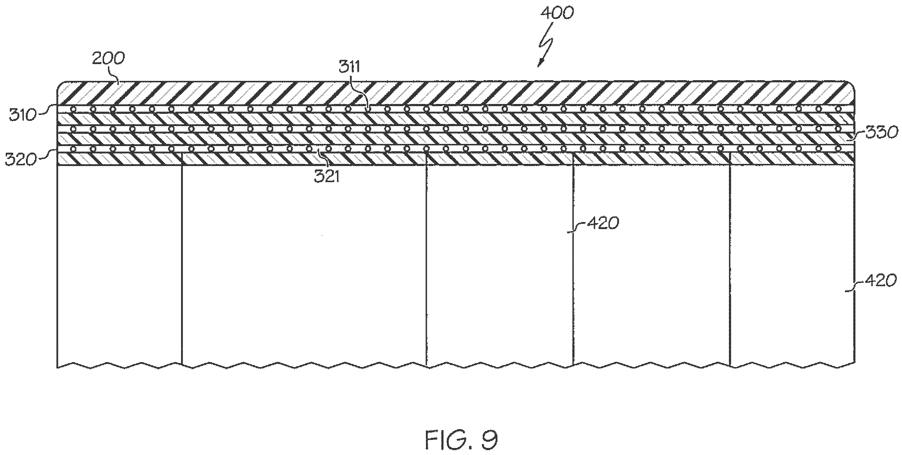

The shear band 300 is preferably annular, and is shown in cross-section in Figure 9, and is preferably located radially inward of the tire tread 200. The shear band 300 includes a first and second reinforced elastomer layer 310, 320 separated by a shear matrix 330 of elastomer. Each inextensible layer 310, 320 may be formed of parallel inextensible reinforcement cords 311, 321 embedded in an elastomeric coating. The reinforcement cords 311, 321 may be steel, aramid, or other inextensible structure. In the first reinforced elastomer layer 310, the reinforcement cords 311 are oriented at an angle Φ in the range of 0 to +/- 10 degrees relative to the tire equatorial plane. In the second reinforced elastomer layer 320, the reinforcement cords 321 are oriented at an angle ϕ in the range of 0 to +/- 10 degrees relative to the tire equatorial plane. Preferably, the angle Φ of the first layer is in the opposite direction of the angle ϕ of the reinforcement cords in the second layer. That is, an angle + Φ in the first reinforced elastomeric layer and an angle - ϕ in the second reinforced elastomeric layer.

The shear matrix 330 preferably has a thickness in the range of 2.54 mm to 5.08 mm, more preferably 3.81 mm. The shear matrix 330 is preferably formed of an elastomer material having a shear modulus G in the range of 2.5 to 40 MPa, and more preferably in the range of 20 to 40 MPA. The shear band has a shear stiffness GA and a bending stiffness El. It is desirable to maximize the bending stiffness of the shearband El and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to El of the shear band is acceptable in the range of 0.02 to 100 with an ideal range of 1 to 50.

In an alternative embodiment, the shear band may comprise any structure which has the above described ratios of GA/EI and EA/EI. The tire tread is preferably wrapped about the shear band and is preferably integrally molded to the shear band.

### SPOKE LOOP STRUCTURE

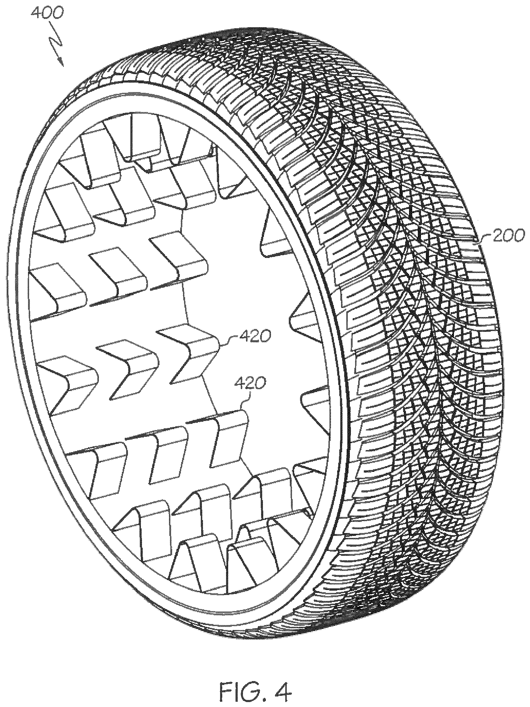

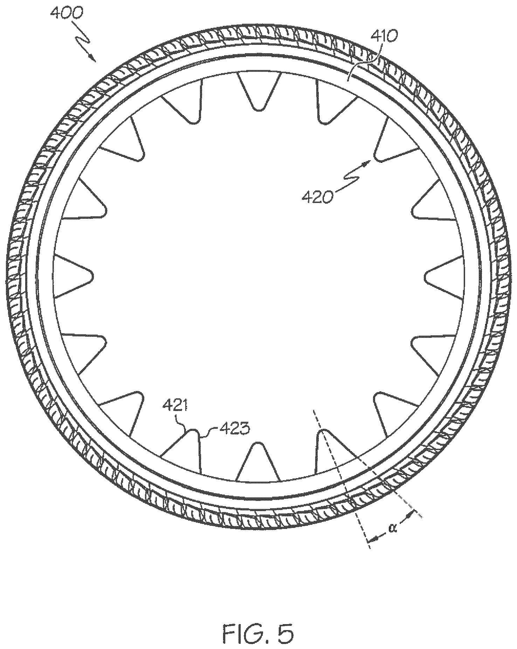

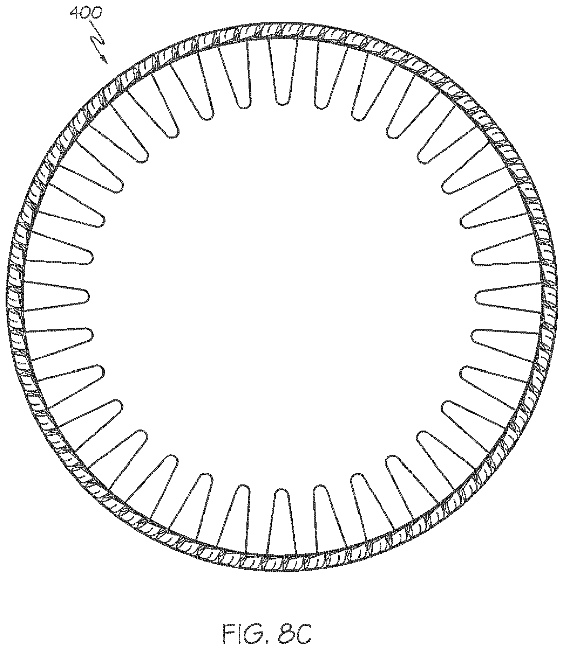

The spoke loop structure 400 functions to carry the load transmitted from the shear layer. The spoke loops 420 are primarily loaded in tension and shear and cannot carry any compression load. Figure 4 illustrates an exemplary spoke loop structure 400 having three circumferentially aligned sets of loops 420 which are spaced apart in the axial direction. However, the spoke loop structure may have multiple rows of loops. As shown in Figure 5, each loop 420 extends inward towards the wheel 500 from an outer annular ring 410. Preferably, each loop 420 is V shaped or triangular in shape. Each loop has a first side 421 and a second side 423. In one embodiment, the loops are not oriented in the radial direction. In another embodiment, the sides of the spoke loops are primarily oriented in the radial direction. The orientation of the loops with respect to the radial direction may thus be varied. As shown in Figure 8C, increasing the number of loops also changes the angle of the loop side with respect to the radial direction.

The radial height of each loop 420 is in the range of 75% to 100% of the nominal radial distance between the inner surface of the shear band and the inner radius R of the pins plus the thickness of the flexible loop shown in FIG. 11. More preferably, it is in the range of 80% to 90%. The circumferential spacing of the loops 420 may vary as desired, and the circumferential gap spacing between loops may be reduced to increase the number of loops 420. Each loop 420 has radially outer ends 422, 424 which are secured to the outer annular ring 410, which is bonded to the shear band and outer tread structure. Preferably, the radially outer ends 422, 424 are integrally formed with the shear band and tread outer structure. As shown in Fig. 4, the spoke loop structure may have multiple rows of circumferentially aligned spoke loops.

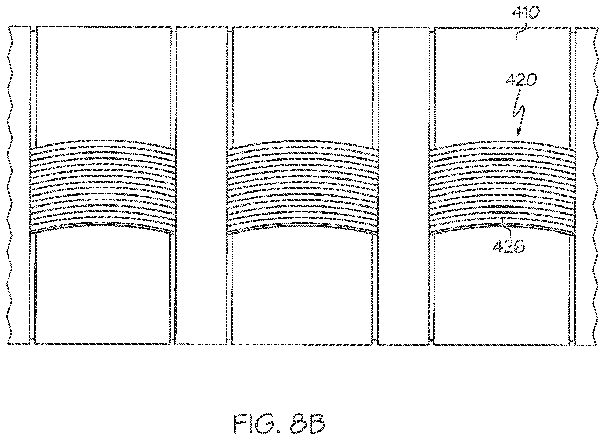

As shown in Figure 8B, the loops 420 are preferably formed of a flexible strip 430, preferably a flexible strip of rubber or elastomer, and more preferably, a reinforced elastomer strip with parallel reinforcement cords 426 such as nylon or polyester cords. The reinforcement cords 426 are aligned parallel with respect to each other, and thus when formed in the loop are not radially oriented when assembled. The orientation of the cords 426 in each strip are typically oriented in a direction parallel with the longitudinal axis of the strip, however the cords may also be oriented at an angle θ in the range of -60 to + 60 degrees, and more preferably - 45 to +45 degrees with respect to the strip longitudinal axis L. The strip width is typically 7.62 mm to 50.4 mm but may vary as desired. The thickness of the strip or flexible loop is typically 1.02 mm 3.65 mm but may vary.

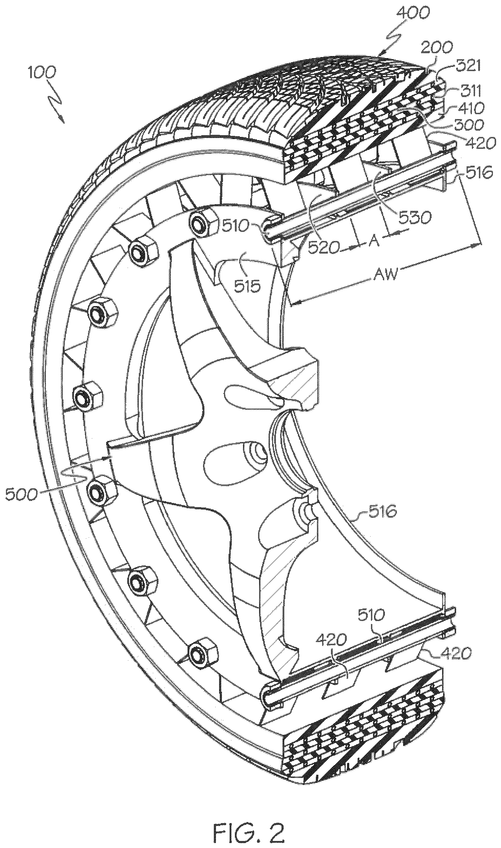

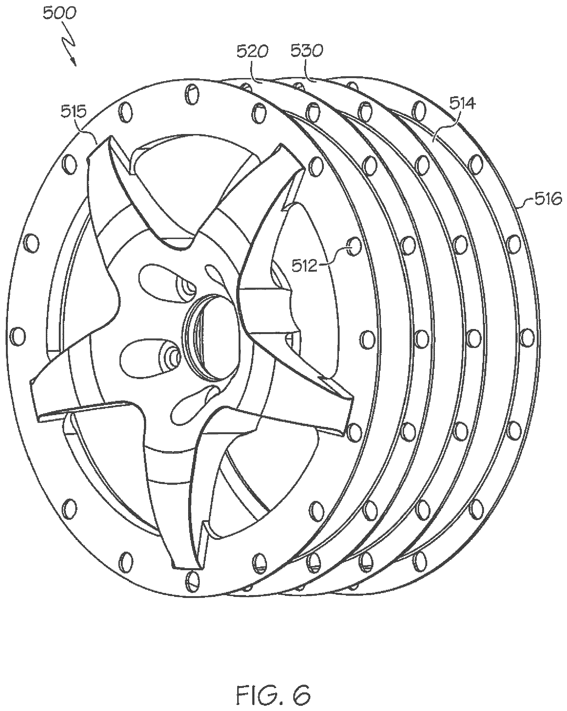

As shown in Figure 2, each loop 420 of the spoke loop structure is secured to a wheel 500 via locking members, which in this example is a bolt 510 in combination with nuts 508 which are secured to the threaded ends of bolt 510. The locking member may also be a clamp, spring loaded clip, pin or other mechanical locking means known to those skilled in the art. As shown in Figure 6, the wheel 500 includes a plurality of circumferential partitions 520, 530 located between outer ends 515 and 516. As shown in Figure 2, the circumferential partitions 520, 530 together with the wheel rim inner surface 514 function to keep the spoke loops separated from each other in discrete compartments, as well as to prevent axial motion of each spoke loop. Each bolt 510 extends axially across the wheel 500 from a first side 515 to a second side 516, and through as aligned holes of each circumferential partition. Each bolt also is received in an axially aligned row of the spoke loops in order to secure each spoke loop to the rim between two circumferential partitions.

The locking members also function to pretension the spoke loops. The length of strip used to form each loop may also be varied in order to achieve the desired loop pretension. In order to tune the nonpneumatic tire for desired performance characteristics, the spring rate may be varied across the axial width of the tire by varying the stiffness of the cords selected for a set of loops, or by the cord angle orientation. Each loop set may use a different type of cord or different angle of cords in order to have the desired spring rate of the loops in a given set.

Each loop preferably has an axial width A that is substantially less than the axial width AW of the non-pneumatic tire. The axial width A of each loop is preferably in the range of 5-20% of the tire's axial width AW, and more preferably 5-10% AW. If more than one set of loops are utilized, than the axial thickness of each loop may vary or be the same.

Each spoke loop structure 400 has a spring rate SR which may be determined experimentally by measuring the deflection under a known load, as shown in FIG. 12. One method for determining the spoke loop structure spring rate k is to mount the spoke loop structure to a hub and attaching the outer ring of the spoke loop structure to a rigid test fixture. A downward force is applied to the hub, and the displacement of the hub is recorded. The spring rate k is determined from the slope of the force deflection curve as shown in FIG. 13. It is preferred that the spoke loop structure spring rate be greater than the spring rate of the shear band. It is preferred that the spoke loop structure spring rate be in the range of 4 to 12 times greater than the spring rate of the shear band, and more preferably in the range of 6 to 10 times greater than the spring rate of the shear band.

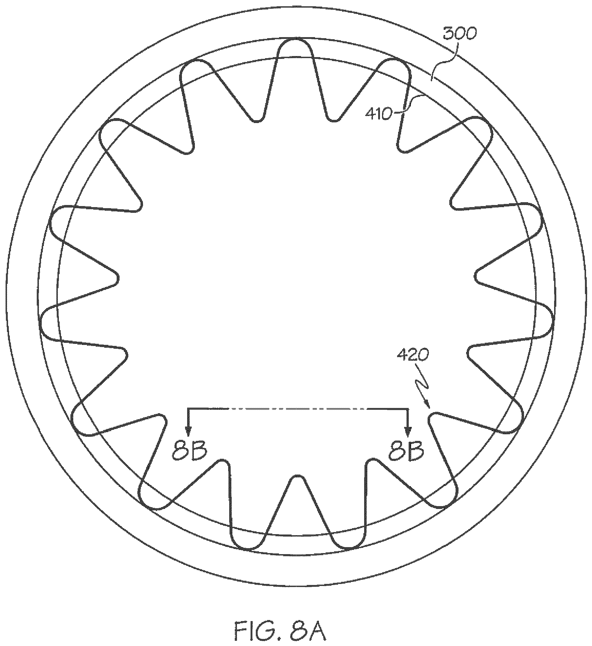

If more than one row of spoke loops is used, each row may have the same spring rate or a different spring rate. The spring rate of the non-pneumatic tire may be adjusted by increasing the number of spoke loop structures as shown in Figure 8. Alternatively, the spring rate of each row of spoke loops may be different by varying the geometry of the spoke loop structure or changing the material.

## Claims

1. A non-pneumatic tire and wheel assembly comprising a wheel (500) and a non-pneumatic tire (100), the non-pneumatic tire (100) comprising a spoke loop structure (400) forming an annular ring, a ground contacting tread portion (200) and a shear band (300), wherein the spoke loop structure (400) comprises a first row and a second row of spoke loops aligned in the circumferential direction, both the first and the second row of spoke loops having a plurality of flexible loops (420) extending radially inward from the shear band (300), wherein each loop (420) is formed from a strip of elastomeric material, and wherein each loop (420) is connected to the wheel (500), **characterized in that** the strip length of each of the spoke loops (420) of the second row of spoke loops (420) is longer than the strip length of each of the spoke loops of the first row of spoke loops (420).

2. The non-pneumatic tire and wheel assembly of claim 1 wherein the wheel (500) has at least two circumferential partitions (520, 530).

3. The non-pneumatic tire and wheel assembly of claim 2 wherein each spoke loop (420) is received in a compartment formed between two adjacent partitions (520, 530).

4. The non-pneumatic tire and wheel assembly of claim 3 wherein the compartment is configured to prevent axial movement of the spoke loop (420).

5. The non-pneumatic tire and wheel assembly of at least one of the previous claims wherein a pin is received in each flexible loop (420), and wherein the pin has a first end and a second end, wherein the first and second ends are mounted to the wheel (500).

6. The non-pneumatic tire and wheel assembly of at least one of the previous claims wherein each spoke loop (420) has an axial thickness less than the axial thickness of the non-pneumatic tire (100).

7. The non-pneumatic tire and wheel assembly of at least one of the previous claims wherein the plurality of spoke loops (420) are aligned circumferentially.

8. The non-pneumatic tire and wheel assembly of at least one of the previous claims wherein each spoke loop (420) is formed of a strip of elastomer reinforced with a plurality of parallel reinforcement cords (426), the reinforcement cords being preferably aligned with a longitudinal axis of the strip of elastomer.

9. The non-pneumatic tire and wheel assembly of claim 8 wherein the reinforcement cords are angled with respect to a longitudinal axis of the strip of elastomer in the range of from 0 to 45 degrees.

10. The non-pneumatic tire and wheel assembly of at least one of the previous claims wherein each spoke loop (420) is formed of a strip of elastomer reinforced with a plurality of parallel reinforcement cords (426) aligned in both a first and second direction opposite the first direction.

11. The non-pneumatic tire and wheel assembly of at least one of the previous claims wherein each spoke loop (420) has a side, and wherein the angle of the side with respect to the radial direction ranges from 2 to 15 degrees.

## Patentansprüche

1. Nichtpneumatische Reifen- und Radanordnung, die ein Rad (500) und einen nichtpneumatischen Reifen (100) umfasst, wobei der nichtpneumatische Reifen (100) eine Speichenschleifenstruktur (400) umfasst, die einen ringförmigen Ring, einen bodenberührenden Laufflächenabschnitt (200) und ein Scherband (300) ausbildet, wobei die Speichenschleifenstruktur (400) eine erste Reihe und eine zweite Reihe von Speichenschleifen umfasst, die in der Umfangsrichtung ausgerichtet sind, wobei sowohl die erste als auch die zweite Reihe von Speichenschleifen mehrere flexible Schleifen (420) aufweist, die sich von dem Scherband (300) radial nach innen erstrecken, wobei jede Schleife (420) aus einem Streifen aus Elastomermaterial ausgebildet ist und wobei jede Schleife (420) mit dem Rad (500) verbunden ist, **dadurch gekennzeichnet, dass** die Streifenlänge jeder der Speichenschleifen (420) der zweiten Reihe von Speichenschleifen (420) länger als die Streifenlänge jeder der Speichenschleifen der ersten Reihe von Speichenschleifen (420) ist.

2. Nichtpneumatische Reifen- und Radanordnung nach Anspruch 1, wobei das Rad (500) wenigstens zwei Umfangsunterteilungen (520, 530) aufweist.

3. Nichtpneumatische Reifen- und Radanordnung nach Anspruch 2, wobei jede Speichenschleife (420) in einer Kammer aufgenommen ist, die zwischen zwei angrenzenden Unterteilungen (520, 530) ausgebildet ist.

4. Nichtpneumatische Reifen- und Radanordnung nach Anspruch 3, wobei die Kammer konfiguriert ist, um eine axiale Bewegung der Speichenschleife (420) zu verhindern.

5. Nichtpneumatische Reifen- und Radanordnung nach wenigstens einem der vorhergehenden Ansprüche, wobei ein Stift in jeder flexiblen Schleife (420) aufgenommen ist und wobei der Stift ein erstes Ende und ein zweites Ende aufweist, wobei das erste und das zweite Ende an dem Rad (500) montiert sind.

6. Nichtpneumatische Reifen- und Radanordnung nach wenigstens einem der vorhergehenden Ansprüche, wobei jede Speichenschleife (420) eine axiale Dicke aufweist, die geringer als die axiale Dicke des nichtpneumatischen Reifens (100) ist.

7. Nichtpneumatische Reifen- und Radanordnung nach wenigstens einem der vorhergehenden Ansprüche, wobei die mehreren Speichenschleifen (420) in Umfangsrichtung ausgerichtet sind.

8. Nichtpneumatische Reifen- und Radanordnung nach wenigstens einem der vorhergehenden Ansprüche, wobei jede Speichenschleife (420) aus einem Elastomerstreifen ausgebildet ist, der mit mehreren parallelen Verstärkungskorden (426) verstärkt ist, wobei die Verstärkungskorde vorzugsweise mit einer Längsachse des Elastomerstreifens ausgerichtet sind.

9. Nichtpneumatische Reifen- und Radanordnung nach Anspruch 8, wobei die Verstärkungskorde in Bezug auf eine Längsachse des Elastomerstreifens in dem Bereich von 0 bis 45 Grad abgewinkelt sind.

10. Nichtpneumatische Reifen- und Radanordnung nach wenigstens einem der vorhergehenden Ansprüche, wobei jede Speichenschleife (420) aus einem Elastomerstreifen ausgebildet ist, der mit mehreren parallelen Verstärkungskorden (426) verstärkt ist, die sowohl in einer ersten als auch in einer zweiten Richtung, entgegengesetzt der ersten Richtung, ausgerichtet sind.

11. Nichtpneumatische Reifen- und Radanordnung nach wenigstens einem der vorhergehenden Ansprüche, wobei jede Speichenschleife (420) eine Seite aufweist und wobei der Winkel der Seite in Bezug auf die radiale Richtung in dem Bereich von 2 bis 15 Grad liegt.

## Revendications

1. Assemblage d'une roue et d'un bandage non pneumatique, qui comprend une roue (500) et un bandage non pneumatique (100), le bandage non pneumatique (100) comprenant une structure (400) du type à rayons sous la forme de boucles, qui forme un anneau circulaire, une portion (200) qui fait office de bande de roulement entrant en contact avec le sol et une bande (300) qui résiste au cisaillement ; dans lequel la structure (400) du type à rayons sous la forme de boucles comprend une première rangée et une deuxième rangée de rayons sous la forme de boucles qui sont mises en alignement dans la direction circonférentielle, à la fois la première et la deuxième rangée de rayons sous la forme de boucles possédant un certain nombre de boucles flexibles (420) qui s'étendent, dans la direction radiale, à l'intérieur de la bande (300) qui résiste au cisaillement ; dans lequel chaque boucle (420) est réalisée à partir d'une bande de matière élastomère ; et dans lequel chaque boucle (420) est reliée à la roue (500), **caractérisé en ce que** la longueur de bande de chacun des rayons sous la forme de boucles (420) de la deuxième rangée de rayons sous la forme de boucles (420) est supérieure à la longueur de bande de chacun des rayons sous la forme de boucles de la première rangée de rayons sous la forme de boucles (420).

2. Assemblage d'une roue et d'un bandage non pneumatique selon la revendication 1, dans lequel la roue (500) possède au moins deux séparations circonférentielles (520, 530).

3. Assemblage d'une roue et d'un bandage non pneumatique selon la revendication 2, dans lequel chaque rayon sous la forme d'une boucle (420) vient se loger dans un compartiment qui est réalisé entre deux séparations adjacentes (520, 530).

4. Assemblage d'une roue et d'un bandage non pneumatique selon la revendication 3, dans lequel le compartiment est configuré pour empêcher un mouvement axial du rayon sous la forme d'une boucle (420).

5. Assemblage d'une roue et d'un bandage non pneumatique selon au moins une des revendications précédentes, dans lequel une broche vient se loger dans chaque boucle flexible (420) ; et dans lequel la broche possède une première extrémité et une deuxième extrémité ; dans lequel la première et la deuxième extrémité sont montées sur la roue (500).

6. Assemblage d'une roue et d'un bandage non pneumatique selon au moins une des revendications précédentes, dans lequel chaque rayon sous la forme d'une boucle (420) possède une épaisseur axiale qui est inférieure à l'épaisseur axiale du bandage non pneumatique (100).

7. Assemblage d'une roue et d'un bandage non pneumatique selon au moins une des revendications précédentes, dans lequel lesdits plusieurs rayons sous la forme de boucles (420) sont disposés en alignement dans la direction circonférentielle.

8. Assemblage d'une roue et d'un bandage non pneumatique selon au moins une des revendications précédentes, dans lequel chaque rayon sous la forme d'une boucle (420) est réalisé à partir d'une bande d'une matière élastomère qui est renforcée avec un certain nombre de câblés de renforcement parallèles (426), les câblés de renforcement étant de préférence disposés en alignement avec un axe longitudinal de la bande de matière élastomère.

9. Assemblage d'une roue et d'un bandage non pneumatique selon la revendication 8, dans lequel les câblés de renforcement forment un angle par rapport à un axe longitudinal de la bande de matière élastomère qui se situe dans la plage allant de 0 à 45 degrés.

10. Assemblage d'une roue et d'un bandage non pneumatique selon au moins une des revendications précédentes, dans lequel chaque rayon sous la forme d'une boucle (420) est réalisé à partir d'une bande de matière élastomère qui est renforcée avec un certain nombre de câblés de renforcement parallèles (426) qui sont disposés en alignement à la fois dans une première direction et dans une deuxième direction qui est opposée à la première direction.

11. Assemblage d'une roue et d'un bandage non pneumatique selon au moins une des revendications précédentes, dans lequel chaque rayon sous la forme d'une boucle (420) possède un côté ; et dans lequel l'angle que forme le côté par rapport à la direction radiale se situe dans la plage allant de 2 à 15 degrés.
